# EUROPÄISCHE PATENTSCHRIFT

(11) **EP 4 116 630 B1**
(45) Veröffentlichungstag und Bekanntmachung des Hinweises auf die Patenterteilung: **25.09.2024**
(21) Anmeldenummer: 22180664.9
(22) Anmeldetag: 23.06.2022
(51) Int. Cl.: F24F 5/00, F24D 3/16

(54) **DECKENSTRAHLPLATTE UND VERFAHREN ZU DEREN HERSTELLUNG**
RADIANT PANEL AND METHOD FOR THE PRODUCTION OF SAME
PLAQUE RAYONNANTE DE PLAFOND ET PROCÉDÉ DE SA FABRICATION

(30) Priorität: 07.07.2021 DE 102021117536
(43) Veröffentlichungstag der Anmeldung: 11.01.2023
(73) Patentinhaber: Schmöle GmbH, 58730 Fröndenberg (DE)
(72) Erfinder: Tement, Marko, 40225 Düsseldorf (DE); Harder, Andreas, 58640 Iserlohn (DE); Bitter Meijk, Kristina, 57439 Attendorn (DE)
(74) Vertreter: Roche, von Westernhagen & Ehresmann

(56) Entgegenhaltungen:
- EP-A1- 0 961 085
- EP-A2- 2 677 264
- WO-A1-2015/022574
- DE-A1- 102013 008 717

## Beschreibung

Gemäß einem ersten Aspekt betrifft die vorliegende Erfindung eine Deckenstrahlplatte zur Klimatisierung eines Raumes.

Derartige Deckenstrahlplatten, welche sich dadurch auszeichnen, dass sie in der Regel eine sehr viel größere Länge als Breite aufweisen und über ein seilartiges Befestigungssystem an der Decke, beispielsweise einer Halle, aufgehängt werden, sind aus druckschriftlich nicht belegbarem Stand der Technik grundsätzlich bekannt.

Typischerweise weisen diese Deckenstrahlplatten mit Sicken versehene Abstrahlflächen als Teil von Haltekassetten auf, wobei in die Sicken geradlinige Rohrkörper eingelegt sind.

Sowohl die Haltekassette mit der Abstrahlfläche als auch die Rohrkörper bestehen in der Regel aus C-Stahl und sind daher relativ schwer, was insbesondere die Montagekosten, Transportkosten etc. erhöht.

Auch aufgrund dieses großen Gewichtes, insbesondere jedoch auch aufgrund der relativ großen Länge der ganzen Deckenstrahlplatte, werden die von der Kassette gehaltenen geradlinigen Rohrsysteme typischerweise aus mehreren Stücken ausgebildet, welche bei der Montage jeweils einzeln zu verbinden sind.

### Stand der Technik

Ein Zusammenführen von Rohrabschnitten ist dabei aus dem Stand der Technik bereits bekannt, nämlich beispielsweise ausweislich der DE 10 2013 008 717 A der Anmelderin, bei welcher es sich aber nicht um eine mehrstückige Deckenstrahlplatte handelt.

Auch die WO2015/022574 A1 stellt einen Stand der Technik dar, bei welcher zwei Rohrabschnitte im Endbereich einer Trägerplatte zusammengeführt werden. Dort wird die Trägerplatte an einem Schienensystem aufgehängt und dann beim Anbringen einer verkleidenden Deckenplatte angehoben.

Die einzelnen, geradlinigen Rohrstränge des Rohrsystems sind dabei strömungstechnisch parallel geschaltet und werden typischerweise am Ende und am Anfang der gesamten Deckenstrahlplatte zusammengeführt.

Ausgehend von dem genannten Stand der Technik ist es die Aufgabe der vorliegenden Erfindung, eine Deckenstrahlplatte bereitzustellen, welche grundsätzlich einfacher zu montieren ist und gegebenenfalls ein eleganteres Aussehen aufweist.

### Erfinderische Lösung

Die Erfindung löst die gestellte Aufgabe gemäß einem ersten Aspekt mit den Merkmalen des Anspruches 1. Gemäß einem weiteren Aspekt der Erfindung wird zur Lösung der gestellten Aufgabe ein Verfahren zur Herstellung und Montage einer Deckenstrahlplatte mit den Merkmalen von Anspruch 7 vorgeschlagen. Bevorzugte Ausführungsformen sind in den abhängigen Ansprüchen definiert.

Dabei besteht die Idee der Erfindung darin, die Anzahl der Kopplungspunkte zur vereinfachten Montage des Rohrsystems zu reduzieren.

Diese Idee erlaubt es nämlich, eine Deckenstrahlplatte aus mehreren Stücken zusammenzusetzen, wobei jedes dieser Stücke ein Teil des Rohrsystems aufweist, ohne dass hierbei eine Vielzahl von geradlinigen Rohren jeweils an ein Nachfolgerrohr angeschlossen werden muss.

Vielmehr werden mindestens zwei dieser Rohre vorher zusammengefasst, so dass für zwei oder mehr parallele und/oder parallel geschaltete Abschnitte des Rohrsystems nur noch ein einzelner Anschluss erfolgen muss (und nicht jeder Rohrabschnitt einzeln zu koppeln/zu verbinden ist).

Bei besagtem Montagebereich der Abstrahlfläche handelt es sich um einen Bereich, in welchem mehrere Stücke der Abstrahlfläche zusammengesetzt werden.

Typischerweise wird die Abstrahlfläche nämlich nicht als einstückige Abstrahlfläche an den Montageort geliefert, die Deckelstrahlplatte mithin nicht in einem Stück. Vielmehr werden üblicherweise mehrere Stücke der Deckenstrahlplatte vorgesehen, jedes umfassend ein Stück der Abstrahlfläche sowie ein Stück des darauf angeordneten Rohrsystems.

Zur Montage werden die Stücke des Rohrsystems dann, bei Annäherung der unterschiedlichen Deckenstrahlplattenstücke aneinander, montiert, und ein Teil des Montagebereiches oder der Montagebereich wird dann mit einer Blende versehen, welche gleichfalls einen Teil der Abstrahlfläche bereitstellt.

Vorteilhaft ist, dass sich durch das Zusammen- und wieder Auseinanderführen der mindestens zwei Abschnitte die Montage der gesamten Deckenstrahlplatte vereinfacht, da die Anzahl der Kopplungspunkte des Rohrsystems minimiert wird.

Insbesondere können natürlich auch mehr als zwei Abschnitte, beispielsweise drei oder vier oder noch mehr Abschnitte, zusammen- und wieder auseinandergeführt werden.

Mithin ist es aber auch möglich, auf der Abstrahlfläche mehrere Tupel (also beispielsweise Paare) von mindestens zwei Abschnitten vorzusehen, welche jeweils im Montagebereich zusammen- und wieder auseinandergeführt sind.

Auch wenn der letztgenannte Fall für die Montage einer Deckenstrahlplatte im Montagebereich mehr als einen Kopplungspunkt für das Rohrsystem vorsieht, so kann auf diese Weise doch die Gesamtanzahl der Kopplungspunkte minimiert werden.

Eine Deckenstrahlplatte umfasst insgesamt typischerweise eine Abstrahlfläche und ein auf ihr angeordnetes Rohrsystem. Erfindungsgemäß weist das Rohrsystem dabei mindestens zwei strömungstechnisch parallel geschaltete Abschnitte auf. Dies bedeutet, dass das Medium oder Fluid (insbesondere Wasser) diese beiden Abschnitte nicht (wie beispielsweise bei einem Rohrmäander) nacheinander durchläuft, sondern im Wesentlichen alternativ oder gleichzeitig. Mithin wird ein Teil des Fluides entlang einer Gabelung den ersten Abschnitt entlang fließen oder geleitet und ein anderer Teil des Fluides den anderen Abschnitt entlang.

Das Rohrsystem ist dabei gemäß einer bevorzugten Ausführungsform unmittelbar an der (bzw. auf der Oberseite der) Abstrahlfläche festgelegt. Hierzu können beispielsweise Wärmeleitelemente, wie Wärmeleitbleche, vorgesehen sein. Diese können Teile des Rohrsystems beispielsweise übergreifen.

Alternativ kann das Rohrsystem auch unmittelbar auf der Abstrahlfläche verschweißt sein oder ähnliches.

"Unmittelbar" bedeutet im Sinne der Erfindung, dass das Rohrsystem nicht zunächst auf einer Zwischenplatte montiert wird, welche dann auf der Abstrahlfläche montiert oder verklebt wird, sondern dass hier vorzugsweise tatsächlich keine weiteren Zwischenelemente vorgesehen sind.

Alternativ kann das Rohrsystem, jedenfalls in Teilabschnitten, auch auf einem Wärmeleitelement aufliegen und somit mittelbar auf der Abstrahlfläche.

Im Gegensatz zum eingangs genannten Stand der Technik kann gemäß einer bevorzugten Ausführung der Erfindung eine sehr große Reduktion des Gewichts ermöglicht werden, sofern das Rohrsystem aus Kupfer, Aluminium oder Edelstahl besteht.

Die Abstrahlfläche kann insbesondere von einer Kassette bereitgestellt werden.

In diesem Sinne kann die Abstrahlfläche oder die Kassette insbesondere aus Aluminium bestehen.

Das Rohrsystem ist gemäß der bevorzugtesten Ausführungsform der Erfindung an einer flachen Abstrahlfläche angeordnet bzw. an einer planen Abstrahlfläche. Im Gegensatz zum Stand der Technik, bei welchem die Abstrahlfläche Sicken vorsieht, in welche das Rohrsystem eingelegt wird, weist die bevorzugte Anordnung auf einer planen Abstrahlfläche den Vorteil einer viel besseren Wärmeübertragung und einer variableren Anordnung auf.

Die Effizienz der ganzen Deckenstrahlplatte kann zusätzlich erhöht werden, indem das Rohrsystem (oder jedenfalls einige Bereiche oder Abschnitte) eine im Querschnitt D-förmige Konfiguration aufweist, wobei die flache Seite dann auf der planen Abstrahlfläche aufliegen kann, um die Wärmeleitung weiter zu verbessern.

Die Deckenstrahlplatte ist zur Klimatisierung eines Raumes gedacht. Insbesondere kann der Raum erwärmt werden. Alternativ ist eine Deckenstrahlplatte aber auch in Fällen einsetzbar, in welchen der Raum eher (nach Art einer Klimaanlage) gekühlt werden soll. Je nach Ausführung wird in dem Rohrsystem dann entweder gekühltes oder erhitztes Fluid geleitet.

Deckenstrahlplatten werden typischerweise an der Decke eines Raumes aufgehängt (beispielsweise einer Halle). Sie werden also im Gegensatz zu andersartigen Flächenwärmetauschern gerade nicht in die Decke eingebaut bzw. dort verputzt oder verkleidet. An ihrer Unterseite sind daher typischerweise auch keine weiteren Elemente (wie beispielsweise Gipsplatten oder ähnliches) angeordnet.

Vielmehr ist die Unterseite einer Deckenstrahlplatte für einen im Raum befindlichen Beobachter typischerweise unmittelbar sichtbar (in diesem Zusammenhang sei angemerkt, dass eine sickenfreie Abstrahlfläche hier optische Vorteile aufweist).

Ein derartiger Raum wird typischerweise von der Decke, einem Bodenbereich sowie mindestens einer Wand begrenzt. Gegebenenfalls können einige oder alle dieser Wände aber auch entfallen. Der Raum wird demnach insbesondere durch den Deckenbereich und seinen Bodenbereich definiert.

Zur Befestigung an dieser Decke ist ein Befestigungssystem nach einer Art einer freihängenden Befestigung vorgesehen.

Als "freihängend" wird hierbei ein System aufgefasst, welches es ermöglicht, die Deckenstrahlplatte an der Decke zu befestigen, ohne dass diese auf Trägern oder Schienen oder ähnlichem aufgelegt wird. Vielmehr soll die Bezeichnung "freihängend" verdeutlichen, dass die Deckenstrahlplatte nach oben hin von über ihr angeordneten Mitteln, beispielsweise von Seilen, Stäben, Gewindestangen oder ähnlichem (insbesondere stangenförmigen Körpern) an der Decke gesichert ist.

Das Befestigungssystem kann optional, insbesondere deckenseitige, Montageschienen aufweisen. Eine oder mehrere Deckenstrahlplatten können dann einfach in die Montageschienen eingehängt werden und sind somit insbesondere bereits ausgerichtet.

Die Deckenstrahlplatte kann ein derartiges Befestigungssystem entweder umfassen (beispielsweise kann die Deckenstrahlplatte samt Seilen oder ähnlichem vertrieben werden). Alternativ kann die Deckenstrahlplatte aber auch lediglich Mittel zum Zusammenwirken mit einem derartigen System aufweisen. In diesem Fall können beispielsweise an der Deckenstrahlplatte Aufnahmen, Nuten, Löcher, Ösen, (Quer-) Stege, Bohrungen oder ähnliches vorgesehen sein, welche mit Mitteln eines entsprechenden Befestigungssystems kooperieren (beispielsweise von diesen hintergriffen oder durchgriffen werden) können.

An dieser Stelle sei noch darauf hingewiesen, dass die mindestens zwei strömungstechnisch parallelgeschalteten Abschnitte des Rohrsystems insbesondere auch parallel angeordnet sein können, was eine besonders raumsparende Anordnung auf der Abstrahlfläche ermöglicht.

Gemäß der Erfindung sind die mindestens zwei Abschnitte auf bzw. oberhalb der Abstrahlfläche zusammen- und wieder auseinandergeführt. Dies soll insbesondere aussagen, dass der Bereich, in welchem die beiden Abschnitte zusammengeführt sind, gemäß Hauptanspruch auch auf/oberhalb der Abstrahlfläche liegt, und zwar in dem Bereich in welchem die zwei Abschnitte zusammengeführt sind und von einer Blende abgedeckt sind, welche einen Teil der Abstrahlfläche bereitstellt.

Gemäß einer weiteren vorteilhaften Ausgestaltung der Erfindung weist das Rohrsystem eine plane Unterseite auf. Wie oben bereits angedeutet, ermöglicht dies eine bevorzugte, klarere Optik und ist insbesondere in dem Fall vorgesehen, dass die Abstrahlfläche sickenfrei ausgebildet ist.

Gemäß der bevorzugsten Ausführungsform der Erfindung wird die Abstrahlfläche von einer Kassette bereitgestellt.

Mithin bedeutet dies, dass die Deckenstrahlplatte insgesamt eine Kassette umfasst, die aus Abstrahlfläche sowie (seitlichen) Begrenzungselementen besteht, welche insbesondere rechtwinklig von der Abstrahlfläche abstehen können.

Typischerweise sind die Abstrahlfläche und die seitlichen Begrenzungselemente einstückig-stoffschlüssig ausgebildet.

Vorzugsweise kann die Kassette aus Aluminium bestehen.

Bei einer Kassette ermöglichen die seitlichen Begrenzungselemente zunächst eine schalenartige Ausbildung der Deckenstrahlplatte, so dass beispielsweise oberhalb der Abstrahlfläche befindliches Kondenswasser oder Staub oder ähnliches nicht einfach seitwärts von der Deckenstrahlplatte herunterfallen bzw. -fließen kann.

Auch ermöglicht eine solche Ausgestaltung beispielsweise die Halterung von Dämmmaterialien in der Deckenstrahlplatte (oberhalb des Rohrsystems), welche einer Verbesserung der Akustik und/oder Wärmeleitfähigkeit der Deckenstrahlplatte dienen können.

Schließlich sorgen die Begrenzungselemente auch für eine gewisse Stabilität der gesamten Deckenstrahlplatte bzw. des einen Deckenstrahlplatten- oder Kassettenstückes. Insbesondere wirken diese einem Verdrehen der Deckenstrahlplatte entgegen.

Ferner ist anzumerken, dass die Abstrahlfläche gemäß der Erfindung aus mehreren Stücken besteht, nämlich in Längsrichtung der Deckenstrahlplatte.

Bei der Längsrichtung handelt es sich also um die Richtung der größten Erstreckung der Deckenstrahlplatte.

Typischerweise besteht auch die Kassette aus mehreren Teilen, welche zur Montage der Deckenstrahlplatte zusammengesetzt werden (müssen).

Erfindungsgemäß umfasst die die Deckenstrahlplatte eine in Längsrichtung der Deckenstrahlplatte aus mehreren Stücken bestehende Abstrahlfläche, wobei die Abstrahlfläche im Montagebereich ein kürzeres Stück, nach Art einer Blende aufweist, welches zwischen zwei längeren Stücken angeordnet ist.

Die Abstrahlfläche kann vorzugsweise von einer Kassette der Deckenstrahlplatte bereitgestellt werden.

Das kürzere Stück wird dabei erfindungsgemäß im Montageablauf an der Deckenstrahlplatte angebracht, nachdem im Montagebereich die entsprechenden Rohrsystemkopplungspunkte/Rohrsystemstücke verbunden wurden.

Insbesondere können dem kürzeren Stück der Abstrahlfläche besondere Montagemittel zugeordnet sein, welche eine Montage dieses Stückes an den längeren Stücken mit etwas Spiel ermöglichen. Mithin können variable Montagemittel vorgesehen sein.

Gemäß einer weiteren vorteilhaften Ausgestaltung der Erfindung weist die Deckenstrahlplatte zusätzlich zu den genannten mindestens zwei Abschnitten des Rohrsystems mindestens zwei weitere (insbesondere ebenfalls parallel angeordnete) strömungstechnisch untereinander ebenfalls parallelgeschaltete Abschnitte auf, die im Montagebereich ebenfalls zusammen- und wieder auseinandergeführt sind, wobei diese dann zu den erstgenannten mindestens zwei Abschnitten insgesamt parallel geschaltet sind.

Dies bedeutet insbesondere, dass sich im Montagebereich mindestens zwei Kopplungspunkte des Rohrsystems ausbilden, je einer pro den genannten mindestens zwei Abschnitten.

An dieser Stelle sei angemerkt, dass das Rohrsystem am Anfang oder am Ende der Deckenstrahlplatte (insbesondere in Längsrichtung betrachtet) hinsichtlich seiner Abschnitte komplett zusammengeführt werden kann, so dass sich typischerweise an jedem Ende der Deckenstrahlplatte ein Anschluss für das zu leitende Fluid ergibt.

Gemäß einer weiteren vorteilhaften Ausgestaltung der Erfindung wird das Rohrsystem, jedenfalls abschnittsweise, mit Hilfe von Wärmeleitelementen an der Abstrahlfläche festgelegt. Vorzugsweise können hierzu sogenannte Wärmeleitbleche genutzt werden, welche insbesondere gerade Abschnitte des Rohrsystems übergreifen und mit ihren Flügeln an der Abstrahlfläche festgemacht sind (dort beispielsweise verklebt oder verschweißt sind oder ähnliches). Alternativ kann das Rohrsystem aber auch ohne Wärmeleitelemente auf der Abstrahlfläche befestigt, beispielsweise direkt verschweißt, werden.

Gemäß dem weiteren Aspekt der Erfindung umfasst das Verfahren zur Herstellung und Montage einer Deckenstrahlplatte zunächst das Festlegen mindestens zwei strömungstechnisch parallel geschalteter Abschnitte auf einem ersten Stück einer Abstrahlfläche. Diese laufen zusammen. Das Zusammenlaufen kann, muss aber nicht, auf dem ersten Stück der Abstrahlfläche erfolgen.

Das Gleiche gilt für ein zweites Stück der Abstrahlfläche, auf welcher zwei Abschnitte (wieder) zusammenlaufen.

Verfahrensgemäß werden die beiden Stücke zur Fertigstellung oder Weiterbildung der Deckenstrahlplatte in eine Richtung aufeinander zugeführt und dann wird zunächst der Kopplungspunkt des Rohrsystems verbunden.

Erfindungsgemäß wird anschließend der Montagebereich mit einem dritten, kürzeren, Stück der Abstrahlfläche, in Art einer Blende, abgedeckt oder verblendet werden.

Diesbezüglich sei angemerkt, dass sämtliche Merkmale und Vorteile, welche in Bezug auf die erfindungsgemäße Deckenstrahlplatte voranstehend oder nachstehend beschrieben wurden bzw. werden, selbstverständlich auch auf das erfindungsgemäße Verfahren übertragbar sind und umgekehrt. Diese Merkmale und Vorteile werden an dieser Stelle lediglich aus Gründen der Übersichtlichkeit der Anmeldung nicht explizit wiederholt. Dabei ist der Schutzumfang lediglich durch den Wortlaut der Ansprüche begrenzt.

Weitere Vorteile der vorlingenden Erfindung ergeben sich anhand der Unteransprüche sowie anhand der nachfolgenden Figurenbeschreibung. Darin zeigen:
- Fig. 1: in einer sehr schematischen, isometrischen teilabgeschnittenen Schrägansicht ein exemplarischer Raum mit zwei erfindungsgemäßen, nebeneinander an einer angedeuteten Decke aufgehängten Deckenstrahlplatten,
- Fig. 2: ein Schnitt durch eine Deckenstrahlplatte des Standes der Technik,
- Fig. 3: in einer Ansicht gemäß Fig. 2, also ungefähr in einer Schnittebene orthogonal zur Längserstreckung L in Fig. 1, ein Schnitt durch ein Deckenstrahlplattenstück zur Herstellung einer erfindungsgemäßen Deckenstrahlplatte,
- Fig. 4: ein erstes Deckenstrahlplattenstück zur Herstellung einer erfindungsgemäßen Deckenstrahlplatte in einer sehr schematischen Schrägaufsicht,
- Fig. 5: in einer noch schematischeren Darstellung, etwa in einer Ansicht gemäß Fig. 4, jedoch verkleinert dargestellt, eine aus mehreren Stücken fertiggestellte Deckenstrahlplatte, jedoch unter Fortlassung einiger Elemente wie beispielsweise seitlicher Begrenzungen der Kassette,
- Fig. 6: in einer leicht vergrößerten, jedoch schematischen Schrägaufsicht, der in Fig. 5 mit der Bezugsziffer VI versehene Bereich, und
- Fig. 7: ein zweites Ausführungsbeispiel einer erfindungsgemäßen, abgebrochen dargestellten Deckenstrahlplatte mit einer leicht geänderten Rohrkonfiguration in Aufsicht, welche zwei Kopplungspunkte für die Rohre in einem Montagebereich aufweist.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbeispiele betroffen sind - gleiche oder vergleichbare Teile oder Elemente oder Bereiche mit gleichen Bezugszeichen, teilweise unter Hinzufügung kleiner Buchstaben, Zahlen und/oder Apostrophen, bezeichnet. Gleiches gilt für die der Figurenbeschreibung nachfolgenden Patentansprüche.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mitumfasst, sofern der resultierende Gegenstand unter den Wortlaut der Patentansprüche fällt.

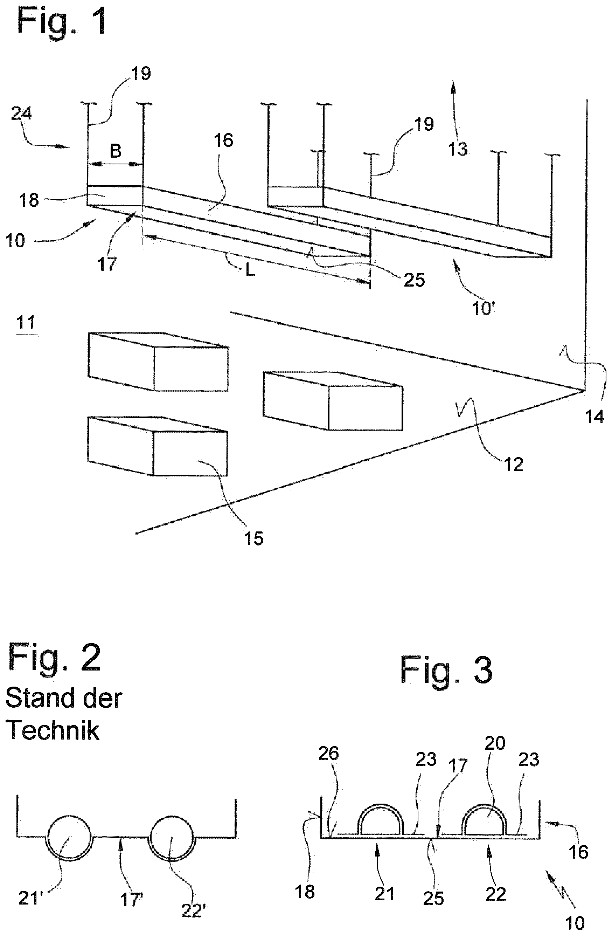

Fig. 1 zeigt zunächst in einer sehr schematisch, schrägen, abgebrochenen dargestellten Ansicht zwei nebeneinander aufgehängte, erfindungsgemäße Deckenstrahlplatten 10 (bzw. 10'), welche deckenseitig in einem als Halle ausgebildeten Raum 11 angeordnet sind.

Beide Deckenstrahlplatten haben eine Länge L und eine Breite B, wobei die Länge L der Deckenstrahlplatten deren jeweilige Breite B um ein Mehrfaches übersteigt. Mit anderen Worten sind die Deckenstrahlplatten länglich ausgebildet.

Die Deckenstrahlplatten 10 und 10' sind zur Klimatisierung des Raumes 11 vorgesehen, wobei der Raum 11 exemplarisch durch einen Boden 12, mindestens eine Wand 14 und eine lediglich angedeutete Decke 13 ausgebildet wird.

In dem Raum 11 können sich, insbesondere im Bereich des Bodens 12, typischerweise Gegenstände 15 beliebiger Art befinden (beispielsweise Maschinen, Pflanzkästen, Lagerregale, Bürotische oder ähnliches).

Diese sind in Fig. 1 lediglich angedeutet.

Die Deckenstahlplatten 10 bzw. 10' dienen exemplarisch einer Beheizung des Raumes 11 (können aber in alternativen Ausgestaltungen dessen Kühlung dienen).

Die Deckenstrahlplatten 10 gemäß Fig. 1 werden hauptsächlich durch jeweils eine Kassette 16 definiert.

Eine solche Kassette 16 besteht dabei aus einer Abstrahlfläche 17 sowie seitlichen Begrenzungen oder Rändern 18.

Die Kassetten 16 können jeweils ein, in Fig. 1 noch nicht dargestelltes, Rohrsystem lagern, welches ein Fluid entlang der Abstrahlfläche 17 leiten kann.

Die Kassette 16 wird ausweislich Fig. 1 von einem Befestigungssystem 24 an der Decke 13 freihängend gehalten, wobei besagtes Befestigungssystem 24 vorzugsweise Befestigungsseile 19 umfasst (insbesondere mehrere).

Bereits Fig. 1 lässt sich entnehmen, dass die erfindungsgemäßen Deckenstrahlplatten 10 für einen im Raum 11 befindlichen Nutzer ein besonders ansprechendes, da homogenes, Erscheinungsbild abgeben. Dies liegt insbesondere daran, dass die Abstrahlfläche 17, insbesondere deren Unterseite 25, (im Wesentlichen) plan ausgebildet ist.

Dies ist im Stand der Technik nicht so: Wie Fig. 2 exemplarisch zeigt, weisen die Abstrahlflächen 17' der Vorrichtung des Standes der Technik typischerweise Sicken auf, in welchen Rohrabschnitte 21', 22' einliegen. Aufgrund dieser Sicken ergibt sich für einen unter einer solchen Vorrichtung befindlichen Nutzer gerade kein entsprechendes, da in der Regel nicht homogenes, Erscheinungsbild der Deckenstrahlplatte.

Anders löst dies ausweislich Fig. 3 die bevorzugte Ausführungsform einer Deckenstrahlplatte, welche Figur einen Querschnitt, etwa orthogonal zur Längserstreckung L, durch die erfindungsgemäße Deckenstrahlplatte 10 gemäß Fig. 1, zeigt (also im Wesentlichen einen Querschnitt entlang der Breitenerstreckung B).

Fig. 3 lässt sich dabei entnehmen, dass nicht nur die Unterseite 25 der Abstrahlfläche 17 plan ausgebildet ist, sondern insbesondere auch die Oberseite 26, mithin die gesamte Abstrahlfläche 17.

Die beiden in Fig. 3 sichtbaren Abschnitte 21 und 22 des Rohrsystems 20 liegen daher nicht in einer Sicke ein, sondern liegen auf der Oberseite 26 der Abstrahlfläche 17 (unmittelbar und/oder plan) auf.

Insbesondere sind die beiden Abschnitte 21 und 22 ausweislich Fig. 3 im Querschnitt D-förmig ausgebildet, was eine optimierte Wärmeübertragung an die Abstrahlfläche 17 ermöglicht.

Zur Festlegung an der Abstrahlfläche 17 ist das Rohrsystem 20 bzw. sind die Rohrabschnitte 21 und 22 mit Hilfe von Wärmeleitelementen 23 an dieser befestigt. Die Wärmeleitelemente 23 sind dabei exemplarisch als streifenartige Wärmeleitbleche ausgebildet.

Die Wärmeleitbleche 23 übergreifen hierbei die Oberseite des Rohrsystems 20 bzw. der Abschnitte 21, 22 und sind mit ihren Flügeln auf der Oberseite 26 der Abstrahlfläche 17 befestigt, beispielsweise verklebt (wobei eine entsprechende Klebeschicht aus Gründen der Übersichtlichkeit in Fig. 3 nicht sichtbar ist).

Zu Fig. 3 sei abschließend angemerkt, dass diese lediglich zwei Rohrabschnitte 21 und 22 zeigt, dies jedoch lediglich der Übersichtlichkeit halber. Tatsächlich weisen die Deckenstrahlplatten gemäß Fig. 1 im Querschnitt drei Abschnitte des Rohrsystems nebeneinander auf, wie dies in den nachfolgenden Figuren verdeutlicht werden wird.

Fig. 1 und Fig. 3 lassen noch nicht erahnen, dass die gesamte Deckenstrahlplatte 10 in Längsrichtung L mehrstückig ausgebildet ist, also aus mehreren Deckenstrahlplattenstücken zusammengesetzt wird.

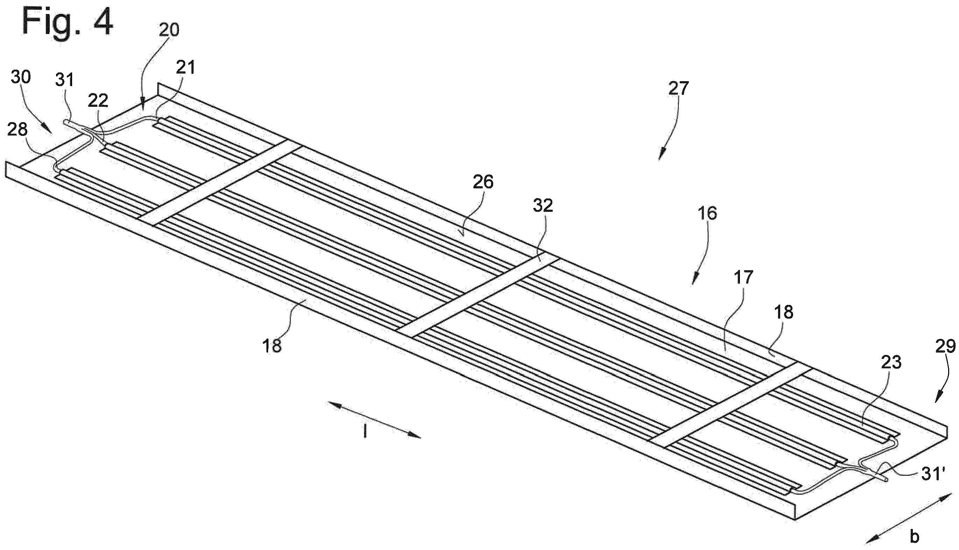

Fig. 4 zeigt in einer sehr schematischen Schrägaufsicht auf die Oberseite 26 ein solches Deckenstrahlplattenstück 27 der erfindungsgemäßen Deckenstrahlplatte 10. Dieser Ansicht lässt sich zunächst der Aufbau einer grundsätzlichen Ausbildung als Kassette 16 noch einmal nachempfinden, mit einer Abstrahlfläche 17 sowie einem seitlichen Rand bzw. einer Begrenzung 18. In der Kassette 16 einliegend, auf der Oberseite 26 der Abstrahlfläche 17, befindet sich das Rohrsystem 20, welches insbesondere in geraden Bereichen mit Hilfe jeweils eines Wärmeleitbleches 23 dort festgelegt ist.

In Fig. 4 lässt sich des Weiteren erkennen, dass das Rohrsystem 20, entgegen der exemplarischen Ausgestaltung in Fig. 3, gemäß Fig. 4 tatsächlich drei (statt zwei) parallel geschaltete Rohrabschnitte 21, 22 und 28 umfasst.

In den beiden Endbereichen 29 und 30 des Deckenstrahlplattenstückes 27 sind diese drei Abschnitte 21, 22 und 28 zusammengeführt und laufen jeweils in einem Sammelstück 31, 31' zusammen.

Das Zusammenlaufen kann dafür nahe am bzw. im entsprechenden Endbereich 29, 30 erfolgen oder auch in einigem Abstand zum eigentlichen Rand.

Fig. 4 lässt zudem erkennen, dass die drei Abschnitte 21, 22 und 28 nicht nur parallel geschaltet, sondern tatsächlich auch parallel angeordnet sind (jedenfalls im Bereich ihrer geraden Erstreckungen, insbesondere über mindestens 80% ihrer Längserstreckung).

Schließlich lassen sich Fig. 4 noch Querstreben 32 der Kassette 16 entnehmen, die insbesondere die Stabilität der Kassette 16 erhöhen können, welche gegebenenfalls aber auch zur Anbringung des in Fig. 1 dargestellten Befestigungssystems 24 dienen können. Beispielsweise können die dort dargestellten Seile 19 im Bereich der Querstreben 32 befestigt werden oder auch an nicht dargestellten Befestigungspunkten im Bereich der seitlichen Begrenzung 18 oder ähnlichem. Entsprechende Montagemittel sind aus Gründen der Übersichtlichkeit aber in den Figuren nicht separat dargestellt.

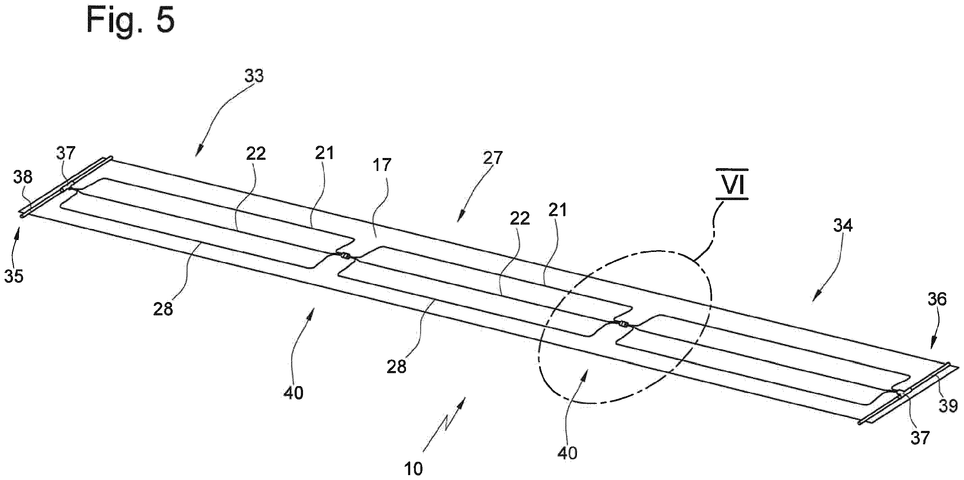

Fig. 5 zeigt dann, in einer Aufsicht, etwa gemäß Fig. 4, bloß in einer verkleinerten Darstellung (unter Fortlassung weiterer Elemente), wie das in Fig. 4 dargestellte Deckenstrahlplattenstück 27 mit zwei weiteren Deckenstrahlplattenstücken 33, 34, insbesondere Endstücken, zu einer Deckenstrahlplatte 10 zusammengefügt wurde.

Fig. 5 lässt dabei, zunächst aus Gründen der Übersichtlichkeit, sowohl die Querstreben 32 als auch die Begrenzungen 18 der Kassette 16 fort, zeigt also von der Kassette 16 im Wesentlichen nur noch die (zusammengesetzte) Abstrahlfläche 17.

Auch sind in Fig. 5 die in Fig. 4 noch dargestellten Wärmeleitelemente 23 der Übersichtlichkeit halber fortgelassen. Alternativ könnte Fig. 5 auch derart interpretiert werden, dass das Rohrsystem 20 bzw. seine einzelnen Abschnitte, ohne Wärmeleitelement unmittelbar auf der Abstrahlfläche 17 befestigt ist, beispielsweise durch einen Verschweißvorgang oder ähnliches.

Fig. 5 lässt sich besonders klar entnehmen, dass nicht nur das Stück 27, sondern auch die Deckenstrahlplattenstücke 33 und 34 identische Abschnitte 21, 22, 28 des Rohrsystems aufweisen, so dass die erfindungsgemäße Lehre, nach welcher mindestens zwei Abschnitte (in diesem Fall sogar drei Abschnitte 21, 22, 28) in einem Montagebereich der Abstrahlfläche 17 zusammen- und wieder auseinandergeführt sind, in dieser Figur besonders klar hervortritt.

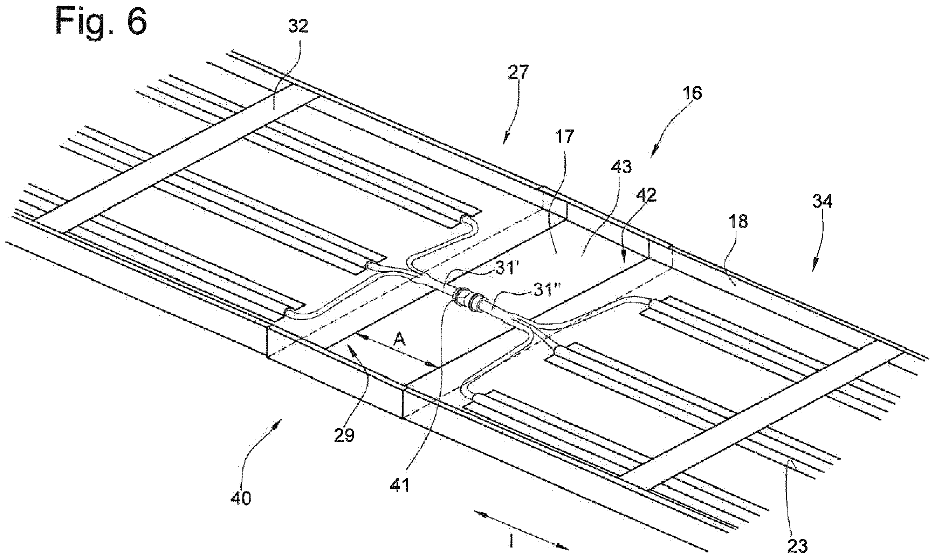

Ein derartiger Montagebereich ist in Fig. 5 exemplarisch eingekreist und mit der Bezugsziffer 40 versehen (auf welchen in Figur 6 anschließend noch eingegangen werden wird).

Mithin sind die Abschnitte 21, 22, 28, wie bereits erläutert, strömungstechnisch parallel geschaltet, die einzelnen Deckenstrahlplattenstücke 33, 27 und 34 der Deckenstrahlplatte 10 sind jedoch strömungstechnisch in Reihe geschaltet.

Daher weist die Deckenstrahlplatte 10 sowohl in ihrem Anfangsbereich 35 als auch in ihrem Endbereich 36 jeweils einen Anschluss 37 mit einem Zulaufrohr 38 bzw. einem Ablaufrohr 39 auf.

Natürlich kann die Deckenstrahlplatte 10 an ein Fluidverteilungssystem angeschlossen werden und gegebenenfalls mit weiteren Deckenstrahlplatten parallel geschaltet werden oder ähnliches.

Der Montagebereich 40, welcher in Fig. 5 eingekreist dargestellt ist, ist in Fig. 6 in einer vergrößerten Darstellung erkennbar, in welcher die Elemente der Kassette 16, welche in Fig. 5 aufgrund der Übersichtlichkeit noch fortgelassen wurden, teilweise wieder dargestellt sind (dies gilt beispielsweise für die Querstreben 32, die Begrenzung 18, aber auch für die Wärmeleitelemente 23).

Fig. 6 lässt insbesondere erkennen, dass das Deckenstrahlplattenstück 27 der Deckenstrahlplatte 10 über einen Verbindungsstutzen 41 mit dem Deckenstrahlplattenstück 34 der Deckenstrahlplatte 10 strömungstechnisch zusammengeschlossen ist. Der Stutzen 41 verbindet insbesondere das, in Fig. 4 bereits angedeutete, Sammelstück 31' des Stückes 27 mit einem Sammelstück 31" des Stückes 34 der Deckenstrahlplatte 10.

Wie in Fig. 6 angedeutet ist, befindet sich der Stutzen 41 leicht oberhalb der Ebene der Abstrahlfäche 17 bzw. leicht oberhalb von deren Oberseite 26. Hierzu können die Sammelstücke 31' bzw. 31" beispielsweise leicht nach oben hin abgekröpft sein (insbesondere in ihrem Fußbereich, also dem Bereich, wo die einzelnen Rohrabschnitte wieder auseinanderlaufen). Auf diese Weise wird das Vorsehen einer sogleich noch zu erläuternden Blende 43 im Bereich der Ebene der Abstrahlfläche 17 ermöglicht.

Zwecks Montage kann der Stutzen 41 beispielsweise auf eines der Sammelstücke 31' oder 31" aufgesetzt werden und anschließend können die beiden Deckenstrahlplattenstücke 27, 34 aufeinander zubewegt und das entsprechend andere Sammelstück 31' bzw. 31" dann ebenfalls in den Stutzen 41 eingeführt werden.

Bei einer derartigen Montage befinden sich der Endbereich 29 des Deckenstrahlplattenstückes 27 und der Endbereich 42 des Deckenstrahlplattenstückes 34 beabstandet voneinander. Dies lässt Fig. 6 auch durch einen Abstand A erkennen.

Eine weitere Besonderheit der Montage der erfindungsgemäßen Deckenstrahlplatte 10 besteht darin, dass im Montagebereich 40 eine Blende 43 vorgesehen ist. Bei der Blende 43 handelt es sich bevorzugt um ein Stück der Kassette 16, welches in Längsrichtung kürzer ausgebildet ist als die Deckenstrahlplattenstücke 27 und 34. Beispielsweise kann die Blende 43 einfach an den Deckenstrahlplattenstücken 27, 34 bzw. an deren Kassettenabschnitten, verklipst werden, eingeschoben werden oder ähnliches.

Für einen im Raum 11 befindlichen Nutzer ergibt sich aber trotzdem ein homogenes Erscheinungsbild der erfindungsgemäßen Deckenstrahlplatte 10. Dabei stellt auch die Blende 43 einen Teil der Abstrahlfläche 17 bereit.

Typischerweise besteht die Blende 43 aus demselben Material wie die Kassetten- bzw. Abstrahlflächenstücke, nämlich vorzugsweise aus Aluminium.

Das Rohrsystem 20 gemäß allen Ausführungsbeispielen kann insbesondere aus Kupfer oder aus Edelstahl bestehen.

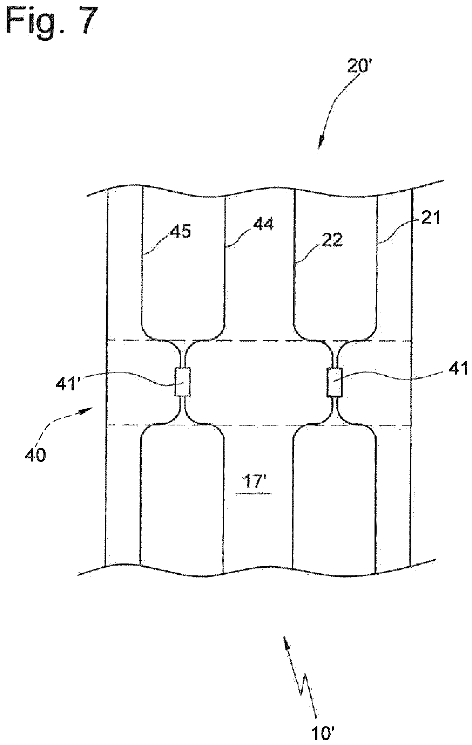

Abschließend sei auf ein letztes Ausführungsbeispiel gemäß Fig. 7 verwiesen, bei welchem es sich um eine abgebrochene Aufsicht auf ein anderes Ausführungsbeispiel handelt, das aufgrund der sehr schematischen Darstellung ebenfalls wieder Teilbereiche (wie die Wärmeleitelemente oder ähnliches) weglässt.

In diesem Ausführungsbeispiel sind einer Abstrahlfläche 17' nicht drei Abschnitte des Rohrsystems zugeordnet, sondern derer vier, nämlich die Abschnitte 21, 22 sowie 44 und 45.

In diesem Ausführungsbeispiel bilden jeweils zwei der Abschnitte, nämlich die Abschnitte 21 und 22 einerseits sowie die Abschnitte 44 und 45 andererseits, ein Abschnittspaar aus. Bei jedem dieser Paare sind die beiden Abschnitte in einem Montagebereich 40 zusammen- und wieder auseinandergeführt. Hierdurch ergeben sich zwei Kopplungspunkte. Insbesondere sind in diesem Ausführungsbeispiel daher zwei Verbindungsstutzen 41, 41' vorgesehen.

Wie auch in den voranstehenden Ausführungsbeispielen, wird durch diese Ausführungsform die Anzahl der Kopplungspunkte des Rohrsystems 20' vermindert, auch wenn nicht sämtliche Abschnitte in genau einer Verbindung zusammenlaufen, sondern zwei (separate) Verbindungen vorgesehen sind. Nichtsdestotrotz wird hierdurch die Anzahl der Verbindungen bzw. Kopplungspunkte vermindert.

Dieses Ausführungsbeispiel gemäß Fig. 7 soll dabei verdeutlichen, dass es nicht auf die tatsächliche Anzahl der Abschnitte ankommt, sondern unterschiedlichste Konstruktionen unter die erfinderische Idee fallen, die Anzahl der Kopplungspunkte zu vermindern.

## Patentansprüche

1. Deckenstrahlplatte (10) zur Klimatisierung eines Raumes (11), umfassend eine in Längsrichtung (I) der Deckenstrahlplatte (10) aus mehreren Stücken (27, 33, 34, 43) bestehende Abstrahlfläche (17), auf welcher ein Rohrsystem (20) zur Leitung eines Fluides, insbesondere Wasser, entlang der Abstrahlfläche (17), vorzugsweise unmittelbar, festgelegt ist, wobei die Länge (L) der Abstrahlfläche (17) deren Breite (B) um ein Mehrfaches übersteigt, wobei das Rohrsystem (20) mindestens zwei strömungstechnisch parallel geschaltete, insbesondere parallel angeordnete, Abschnitte (21, 22, 28; 44, 45) umfasst, und wobei die Deckenstrahlplatte (10) ein, insbesondere seilartiges, Befestigungssystem (24) zur freihängenden Befestigung an einer Decke (13) aufweist oder zumindest Mittel zum Zusammenwirken mit diesem, wobei die mindestens zwei Abschnitte (21, 22, 28; 44, 45) in einem Montagebereich (40) der Abstrahlfläche (17) zusammen- und wieder auseinandergeführt sind, und wobei die Abstrahlfläche (17) im Montagebereich (40) ein, insbesondere in Längsrichtung der Deckenstrahlplatte (10), kürzeres Stück aufweist, welches zwischen zwei längeren Stücken (27, 33, 34) nach Art einer Blende (43) angeordnet ist

2. Deckenstrahlplatte (10) nach einem der voranstehenden Ansprüche, wobei die Abstrahlfläche (17) einen planen, insbesondere sickenfreien, Auflagebereich für das Rohrsystem (20) aufweist und/oder eine plane Unterseite (25).

3. Deckenstrahlplatte (10) nach einem der voranstehenden Ansprüche, wobei die Abstrahlfläche (17) von einer Kassette (16) der Deckenstrahlplatte (10) bereitgestellt wird.

4. Deckenstrahlplatte (10) nach einem der voranstehenden Ansprüche, wobei das Rohrsystem (20) aus Kupfer oder Edelstahl besteht und/oder die Abstrahlfläche (17) aus Aluminium.

5. Deckenstrahlplatte (10) nach einem der voranstehenden Ansprüche, wobei sie mindestens zwei weitere, insbesondere parallel angeordnete, strömungstechnisch untereinander ebenfalls parallel geschaltete Abschnitte (44, 45) umfasst, die im Montagebereich (40) auch zusammen- und wieder auseinandergeführt sind, wobei diese zu den anderen mindestens zwei Abschnitten (21, 22) insgesamt strömungstechnisch parallel geschaltet sind.

6. Deckenstrahlplatte (10) nach einem der voranstehenden Ansprüche, wobei das Rohrsystem (20) mit Hilfe von Wärmeleitelementen (23), insbesondere Wärmeleitblechen, an der Abstrahlfläche (17), vorzugsweise unmittelbar, festgelegt ist.

7. Verfahren zur Herstellung und Montage einer Deckenstrahlplatte (10) zur Klimatisierung eines Raumes (11), nach einem der voranstehenden Ansprüche, umfassend das Festlegen mindestens zwei strömungstechnisch parallel geschalteter, insbesondere parallel angeordneter, erster Abschnitte (21, 22, 28; 44, 45) eines Rohrsystems (20) zur Leitung eines Fluides, welche in einer ersten Verbindung (31') zusammenlaufen, auf einem ersten Stück (27) einer Abstrahlfläche (17) und das Festlegen mindestens zwei strömungstechnisch parallel geschalteter, insbesondere parallel angeordneter, zweiter Abschnitte (21, 22, 28; 44, 45) eines Rohrsystems (20) zur Leitung eines Fluides, welche in einer zweiten Verbindung (31") zusammenlaufen auf einem zweiten Stück (34) der Abstrahlfläche (17), sowie weiter umfassend das nachfolgende Zusammenführen der ersten und zweiten Verbindung (31', 31"), weiter umfassend das Abdecken des Bereiches (40), in welchem die beiden Verbindungen (31', 31") zusammengeführt wurden, mit einem dritten, kürzeren Stück (43) der Abstrahlfläche (17).

## Claims

1. Radiant ceiling panel (10) for air-conditioning a room (11), comprising a radiating surface (17) consisting of a plurality of pieces (27, 33, 34, 43) in the longitudinal direction (I) of the radiant ceiling panel (10), on which a pipe system (20) for conducting a fluid, in particular water, along the radiating surface (17), is fixed, preferably directly, the length (L) of the radiating surface (17) exceeds its width (B) by a multiple, wherein the pipe system (20) comprises at least two sections (21, 22, 28, 44, 45) fluidically connected in parallel, in particular arranged in parallel, and wherein the radiant ceiling panel (10) has a fastening system (24), in particular a cable-like fastening system, for freely suspended fastening to a ceiling (13) or at least means for co-operating therewith, wherein the at least two sections (21, 22, 28; 44, 45) are guided together and apart again in an assembly area (40) of the radiating surface (17), and wherein the radiating surface (17) in the assembly area (40) has a shorter piece, in particular in the longitudinal direction of the radiant ceiling panel (10), which is arranged between two longer pieces (27, 33, 34) in the manner of a screen (43).

2. Radiant ceiling panel (10) according to one of the preceding claims, wherein the radiating surface (17) has a flat, in particular bead-free, support area for the pipe system (20) and/or a flat underside (25).

3. Radiant ceiling panel (10) according to one of the preceding claims, wherein the radiating surface (17) is provided by a cassette (16) of the radiant ceiling panel (10).

4. Radiant ceiling panel (10) according to one of the preceding claims, wherein the pipe system (20) is made of copper or stainless steel and/or the radiating surface (17) is made of aluminium.

5. Radiant ceiling panel (10) according to one of the preceding claims, wherein it comprises at least two further sections (44, 45) which are also fluidically connected in parallel with one another, in particular are arranged in parallel, and are also brought together and moved apart again in the assembly area (40), wherein these are fluidically connected in parallel with the other at least two sections (21, 22) overall.

6. Radiant ceiling panel (10) according to one of the preceding claims, wherein the pipe system (20) is fixed to the radiating surface (17), preferably directly, by means of heat conducting elements (23), in particular heat conducting sheets.

7. Method for manufacturing and mounting a radiant ceiling panel (10) for air conditioning a room (11), according to one of the preceding claims, comprising defining at least two fluidically parallel-connected, in particular parallel-arranged, first sections (21, 22, 28; 44, 45) of a pipe system (20) for conducting a fluid, which converge in a first connection (31'), on a first piece (27) of a radiating surface (17), and defining at least two second sections (21, 22, 28; 44, 45) fluidically connected in parallel, in particular arranged in parallel, of a pipe system (20) for conducting a fluid, which converge in a second connection (31") on a second piece (34) of the radiating surface (17), and further comprising subsequently bringing together the first and second connections (31', 31"), further comprising covering the area (40) in which the two connections (31', 31") have been brought together with a third, shorter piece (43) of the radiating surface (17).

## Revendications

1. Plaque radiante de plafond (10) pour réaliser la climatisation d'une pièce (11) comprenant une surface rayonnante (17) constituée de plusieurs pièces (27, 33, 34, 43) dans le sens longitudinal (1) de la plaque radiante de plafond (10), sur laquelle est fixé, de préférence directement, un système de tuyaux (20) pour la conduite d'un fluide, en particulier de l'eau étant longuement guidé le long de la surface rayonnante (17), la longueur (L) de la surface rayonnante (17) dépassant plusieurs fois sa largeur (B), le système de tuyaux (20) comprend au moins deux sections (27, 33, 34, 43) disposées en parallèle du point de vue de la technique d'écoulement, en particulier disposés en parallèle (21, 22, 28 ; 44, 45) et où la plaque radiante de plafond (10) présente un système de fixation (24), en particulier en forme de câble, pour la fixation en suspension libre à un plafond (13) ou au moins des moyens pour coopérer avec celui-ci, dans laquelle les au moins deux sections (21, 22, 28 ; 44, 45) sont réunies et à nouveau séparées dans une région de montage (40) de la surface de rayonnement (17) entre une première partie de plaque rayonnante de plafond (27) et une deuxième partie de plaque rayonnante de plafond (33, 34), et dans laquelle l'ensemble de la surface de rayonnement (17) présente, dans la région de montage (40), une partie plus courte, en particulier dans la direction longitudinale de la plaque rayonnante de plafond (10), et la surface radiante (17) présentant dans la zone de montage (40) une partie plus courte, en particulier dans le sens longitudinal de la plaque radiante de plafond (10), qui est disposée entre deux parties plus longues (27, 33, 34) à la manière d'un diaphragme (43).

2. Plaque radiante de plafond (10) selon l'un des revendications précédentes où la surface de rayonnement (17) présentant une zone d'appui plane, en particulier sans moulures, pour le système tubulaire (20) et/ou une face inférieure plane (25).

3. Plaque radiante de plafond (10) selon l'une quelconque des revendications précédentes, fournissant la surface de rayonnement ( 17) par une cassette (16) de la plaque rayonnante de plafond (10).

4. Plaque rayonnante de plafond (10) selon l'une quelconque des revendications précédentes, dans laquelle le système de tuyaux (20) est constituée de cuivre ou d'acier inoxydable et/ou la surface de rayonnement (17) est constituée d'aluminium.

5. Plaque rayonnante de plafond (10) selon l'une quelconque des revendications précédentes, comprenant au moins deux sections supplémentaires (44, 45) en particulier agencées en parallèle et également montées en parallèle l'une par rapport à l'autre en termes de technique des fluides, qui sont en outre réunies et séparées à nouveau dans la région de montage (40), dans laquelle lesdites sections supplémentaires sont globalement montées en parallèle en termes de technique des fluides par rapport auxdites au moins deux autres sections (21, 22).

6. Plaque rayonnante de plafond (10) selon l'une quelconque des revendications précédentes, **caractérisé en ce que** le système de tuyaux (20) est fixé à la surface de rayonnement (17), de préférence directement, à l'aide d'éléments conducteurs de chaleur (23), en particulier de tôles conductrices de chaleur.

7. Procédé de fabrication et de montage d'une plaque rayonnante de plafond (10) pour réaliser la climatisation d'une pièce (11), selon l'une quelconque des revendications précédentes, comprenant la définition d'au moins deux premières sections (21, 22, 28 ; 44, 45) d'un système de tuyaux (20) pour la conduite d'un fluide, qui convergent dans une première connexion (31'), sur une première partie de plaque rayonnante de plafond (27) d'une surface de rayonnement (17) et la fixation d'au moins deux secondes sections (21, 22, 28 ; 44, 45) d'un système de tuyaux (20) pour la conduite d'un fluide, qui convergent dans une seconde connexion (31") sur une deuxième partie de plaque rayonnante de plafond (34) de la surface de rayonnement (17), comprenant en outre la réunion ultérieure de la première et de la seconde connexions (31', 31"), et comprenant en outre le recouvrement de la région (40),
dans laquelle les deux connexions (31', 31") ont été réunies, avec une troisième partie (43), en particulier plus courte, de la surface de rayonnement (17).
